# FASCICULE DE BREVET EUROPEEN

(11) **EP 1 924 426 B1**
(45) Date de publication et mention de la délivrance du brevet: **15.07.2009**
(21) Numéro de dépôt: 06808128.0
(22) Date de dépôt: 12.09.2006
(51) Int. Cl.: B29C 70/48, B29C 70/86, B29C 70/88, B29C 70/08, F16C 7/00, B29B 11/16

(54) **PROCEDE DE FABRICATION D UNE PIECE COMPOSITE RTM ET BIELLE COMPOSITE OBTENUE SELON CE PROCEDE**
VERFAHREN ZUR HERSTELLUNG EINES RTM-VERBUNDTEILS UND MIT DIESEM VERFAHREN HERGESTELLTE VERBUNDPLEUELSTANGE
METHOD FOR MAKING A COMPOSITE RTM PART AND COMPOSITE CONNECTING ROD OBTAINED BY SAID METHOD

(30) Priorité: 12.09.2005 FR 0552745
(43) Date de publication de la demande: 28.05.2008
(73) Titulaire: European Aeronautic Defence And Space Company EADS, 75116 Paris (FR); EADS CCR Groupement d'Intérêt Economique, 75116 Paris (FR)
(72) Inventeur: CAVALIERE, Frédérick, F-78180 Montigny le Bretonneux (FR)
(74) Mandataire: Marconnet, Sébastien
(86) Numéro de dépôt international: PCT/FR2006/002102
(87) Numéro de publication internationale: WO 2007/031649

(56) Documents cités:
- EP-A- 0 133 340
- EP-A- 1 364 770
- EP-A1- 0 678 681
- DE-A1-9102004 003 74
- US-A- 4 841 801
- US-A- 4 992 313
- US-A- 5 650 229
- US-A- 6 096 669
- US-A1- 2002 117 252

## Description

L'invention concerne un procédé de fabrication d'une pièce composite RTM (Resin Transfer Molding en anglais), selon la revendication 1, et une bielle composite obtenue selon ce procédé, conformément a la revendication 15. L'invention a pour but d'améliorer les caractéristiques mécaniques en compression d'une telle pièce. L'invention trouve une application particulièrement avantageuse pour des pièces de forme tubulaire, telles que des bielles composites. Ces pièces peuvent être notamment utilisées dans le domaine de l'automobile ou de l'aéronautique.

On connaît notamment deux procédés pour fabriquer des pièces composites tubulaires : le procédé RTM et le procédé préimprégné.

Dans le procédé RTM, un ensemble d'éléments fibreux est positionné de manière particulière autour d'un support. Cet ensemble d'éléments fibreux forme une préforme RTM. Chaque élément fibreux comporte des fibres sèches qui sont généralement entrelacées ou parallèles entre elles. La préforme RTM et le support sont ensuite placés dans un moule à l'intérieur duquel une résine est injectée. L'injection de résine peut être faite sous vide ou sous pression. On polymérise ensuite la résine en lui apportant de l'énergie. Les molécules de cette résine commencent alors à se lier entre elles et à former un réseau solide. On obtient ainsi un matériau composite rigide et léger formé de fibres et de résine polymérisée.

Le procédé RTM présente l'avantage d'une grande flexibilité en permettant la réalisation de pièces à géométrie complexe. En effet, comme les fibres sont sèches au départ, elles peuvent être mises en place plus facilement pour prendre la forme de n'importe quel support. Dans un exemple, pour réaliser une pièce tubulaire, les éléments fibreux possèdent la forme d'une chaussette qui est plaquée autour d'un support tubulaire (mandrin) en mousse par exemple.

Le procédé RTM lors de sa mise en oeuvre, présente également l'avantage de pouvoir intégrer des fonctions, notamment d'assemblage. En effet, la possibilité de faire des pièces de forme complexe permet d'éviter de réaliser plusieurs pièces de forme moins complexe et de les assembler par la suite.

Toutefois, dans le procédé RTM, les fibres ne sont pas très bien alignées. En effet, comme les fibres de la préforme sont sèches, elles peuvent facilement changer d'orientation du fait de la présentation des matériaux fibreux, ou lors de manipulations comme par exemple les opérations de réalisation de la préforme et de mise en moule de la préforme, ' ou lors de l'injection de la résine. Les fibres peuvent ainsi se trouver dans une direction différente de celle prévue au départ et qui était celle de forces de compression par exemple.

Dans une mise en oeuvre du procédé RTM, on a voulu réaliser une préforme fibreuse à partir de fibres sèches entrelacées, et de fibres sèches parallèles entre elles. Les fibres sèches entrelacées avaient pour but de supporter des efforts de flambage, tandis que les fibres parallèles avaient pour but de supporter des efforts de compression. Toutefois, en réalité, les fibres parallèles, maintenues à l'aide d'une trame élastique, présentaient des désorientations de quelques degrés par rapport à la direction des efforts principaux de compression. Après la polymérisation, les caractéristiques mécaniques de la pièce obtenue, en terme de rigidité et tenue en compression, n'étaient pas celles prévues. La pièce obtenue n'a donc pas pu supporter les efforts de compression prévus. En effet, les fibres subissaient localement des efforts de flambage à cause de l'alignement et de l'orientation imparfaite par rapport à la direction des efforts.

En outre, dans le procédé RTM, le taux volumique de fibres n'est pas très important, généralement compris entre 45 à 55 pourcents. Ce taux volumique correspond au rapport entre le volume de fibres et le volume global de la pièce. Les caractéristiques mécaniques des pièces réalisées en RTM sont donc globalement moyennes en compression.

On connaît aussi le procédé préimprégné dans lequel on utilise des rubans ou plis préimprégnés. Ces rubans préimprégnés comportent des fibres préimprégnées de résine qui sont alignées et parallèles entre elles. Ces fibres sont ainsi liées entre elles et maintenues parallèles entre elles à l'aide de cette résine. Contrairement aux fibres utilisées dans le procédé RTM, les fibres des rubans ne sont donc pas sèches au départ, et présentent un très bon alignement et un très bon parallélisme entre elles.

Les pièces préimprégnées sont obtenues par empilement de rubans préimprégnés et sont polymérisées sous pression. Les pièces obtenues avec ce procédé présentent un taux volumique de fibres important, supérieur à 55 pourcents. Les pièces obtenues avec un tel procédé ont donc de très bonnes caractéristiques mécaniques, notamment en compression, dans la direction de l'orientation principale des fibres préimprégnées.

Toutefois, le procédé préimprégné présente des inconvénients et ne permet notamment pas de réaliser facilement des pièces à géométrie complexe comme par exemple des embouts de bielles. En effet, l'ulilisation de rubans préimprégnés est peu adaptée à des géométries non développables, car les rubans préimprégnés se présentent sous forme plane et il est très difficile d'imprimer à ces rubans des formes qui présentent plusieurs rayons de courbure. Pour des pièces à géométrie complexe telles que les embouts de bielles, il peut donc être difficile d'obtenir une bonne compaction de la pièce lors de la polymérisation. Les pièces en préimprégné peuvent donc avoir une mauvaise santé matière, ce qui peut occasionner un taux de rebus important.

L'invention se propose de supprimer les inconvénients du procédé RTM et du procédé préimprégné tout en profitant de leurs avantages respectifs. A cet effet, dans l'invention, on combine de manière particulière la mise en oeuvre de ces deux procédés. On connait le document D1, EP-A-0133340, qui divulgue un procédé de fabrication de piece RTM mettant en oeuvre une combinaison de piece préimprégnée et de préforme fibreuse séche dans laquelle on injecte une resine pour ensuite polymériser l'ensemble. On connait également le document D2, EP-A-1364770, qui décrit un procédé de fabrication de pièce en matériau composite ; ainsi que le document D3, US-A-4841801, qui décrit une bielle réalisée en matériau composite conformément au préambule de la revendication 15.

Plus précisément, l'invention consiste en l'obtention de pièces composites par introduction dans une préforme RTM de pièces préimprégnées qui ont été au préalable polymérisées en partie. Le procédé selon l'invention permet ainsi de réaliser des pièces à géométrie complexe en utilisant des préformes du procédé RTM, et d'améliorer les caractéristiques mécaniques en compression de ces pièces complexes en Introduisant dans la préforme des pièces préimprégnées et prépolymérisées.

En effet, l'insertion de pièces préimprégnées apportent localement un bon alignement des fibres et un taux volumique de fibres important à l'intérieur de la pièce réalisée en RTM. En outre, le fait de polymériser partiellement la résine des pièces préimprégnées permet de figer malignement des fibres et d'éviter notamment que ces fibres ne se déplacent lors d'une manipulation ou lors de la polymérisation de la résine RTM.

Cette polymérisation partielle permet également la création de liaisons chimiques entre les molécules de la résine du préimprégné et celles de la résine RTM, lors de la polymérisation de la résine RTM. Cette création de liaisons permet de rigidifier le matériau composite final et d'obtenir une bonne homogénéité de ce matériau.

Les pièces préimprégnées et prépolymérisées possèdent une géométrie généralement simplifiée. Cette géométrie simplifiée permet d'obtenir une bonne compaction lors de leur réalisation et donc une bonne santé matière. Ces pièces préimprégnées et prépolymérisées sont insérées dans un but structural. En effet, ces pièces sont placées généralement aux endroits où les efforts à supporter en compression sont importants et où la géométrie de la pièce est simple. Dans une réalisation particulière, on fait prendre à la préforme fibreuse RTM la forme complexe d'une bielle, tandis que des pièces préimprégnées sont positionnées dans la préforme aux endroits où les efforts de compression sont les plus intenses.

De préférence, on réalise le nombre nécessaire de pièces préimprégnées et prépolymérisées en mettant en forme sur un outillage spécifique un empilement de rubans préimprégnés, et en polymérisant partiellement la résine de ces rubans. En variante, les pièces préimprégnées sont réalisées directement sur le support permettant la réalisation de la préforme RTM. Ces pièces préimprégnées peuvent subir des opérations de découpe et usinage avant d'être introduite à l'intérieur de la préforme RTM.

Dans l'invention, les pièces préimprégnées et prépolymérisées sont positionnées soit directement sur le support permettant la réalisation de la préforme, soit insérées entre les éléments fibreux secs de la préforme RTM.

L'invention concerne donc un procédé de fabrication d'une pièce composite RTM selon la revendication 1.

L'invention concerne également une bielle en matériaux composite comportant un axe de compression privilégié selon la revendication 15.

L'invention sera mieux comprise à la lecture de la description qui suit et à l'examen des figures qui l'accompagnent. Ces figures ne sont données qu'à titre illustratif et nullement limitatif de l'invention. Ces figures montrent :
- figures 1 à 6 : des représentations schématiques d'étapes du procédé selon l'invention ;
- figures 7 : des représentations schématiques d'étapes permettant d'obtenir des pièces préimprégnées et prépolymérisées.

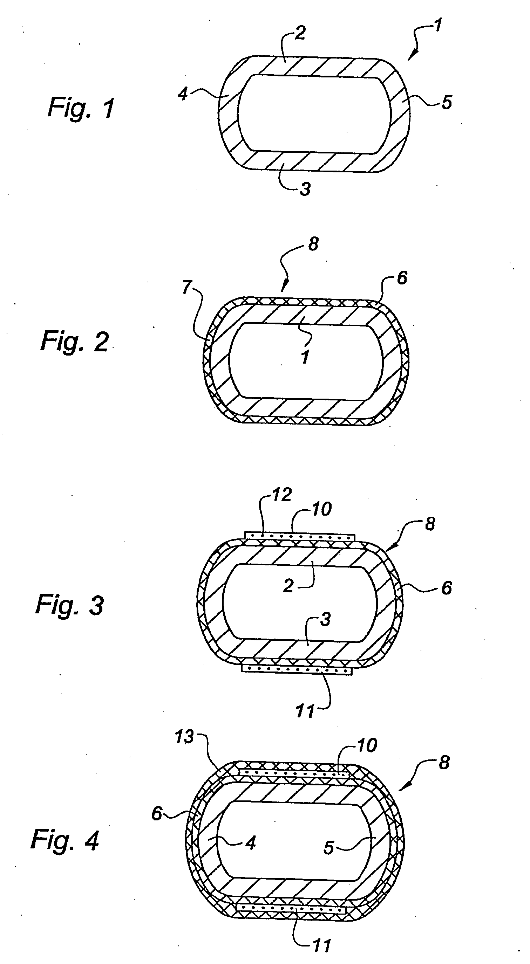

La figure 1 montre une vue en coupe d'un mandrin ou support 1 destiné à imposer une forme à une pièce composite finale. En effet, ce support 1 est l'outil pour la réalisation d'une préforme RTM. Ce support 1 est tubulaire, allongé, et présente globalement la forme d'une bielle.

Plus précisément, vu en coupe, ce support 1 comporte deux faces 2 et 3 plates en regard l'une de l'autre et parallèles entre elles. Ces faces 2 et 3 sont reliées entre elles par l'intermédiaire de deux faces 4 et 5 circulaires globalement en forme d'arc de cercle.

Dans une mise en oeuvre particulière, le support 1 est en métal, en mousse ou en élastomère.

La figure 2 montre une première étape du procédé selon l'invention dans laquelle des premiers éléments 6 fibreux sont plaqués autour du support 1, contre les faces externes de ce support 1. Ces premiers éléments 6 fibreux comportent des fibres 7 sèches entrelacées entre elles.

Ces fibres 7 sèches peuvent être entrelacées de manière à former des angles de + ou - 45 degrés avec l'axe de la pièce. Dans une réalisation, les éléments 6 comportent une forme de chaussette fermée. Ces chaussettes sont déformables et prennent précisément la forme du support 1.

Une préforme 8 sèche comportant les éléments 6 fibreux est ainsi formée autour du support 1. Dans une réalisation, cette préforme 8 est formée à partir d'un nombre d'éléments fibreux supérieur ou égal à 2.

Pour rigidifier légèrement la préforme 8, il est possible de déposer une résine sous forme poudreuse ou en spray entre les couches d'éléments fibreux secs, et de compacter l'ensemble de la préforme.

En variante, les fibres 7 sèches forment entre elles des angles de valeurs différentes et pourraient même être globalement parallèles entre elles.

La figure 3 montre une deuxième étape du procédé selon l'invention. Dans cette deuxième étape, deux pièces 10 et 11 préimprégnées et prépolymérisées, de forme globalement plane, sont positionnées sur la préforme 8 sèche, au dessus des faces 2 et 3 planes du support 1.

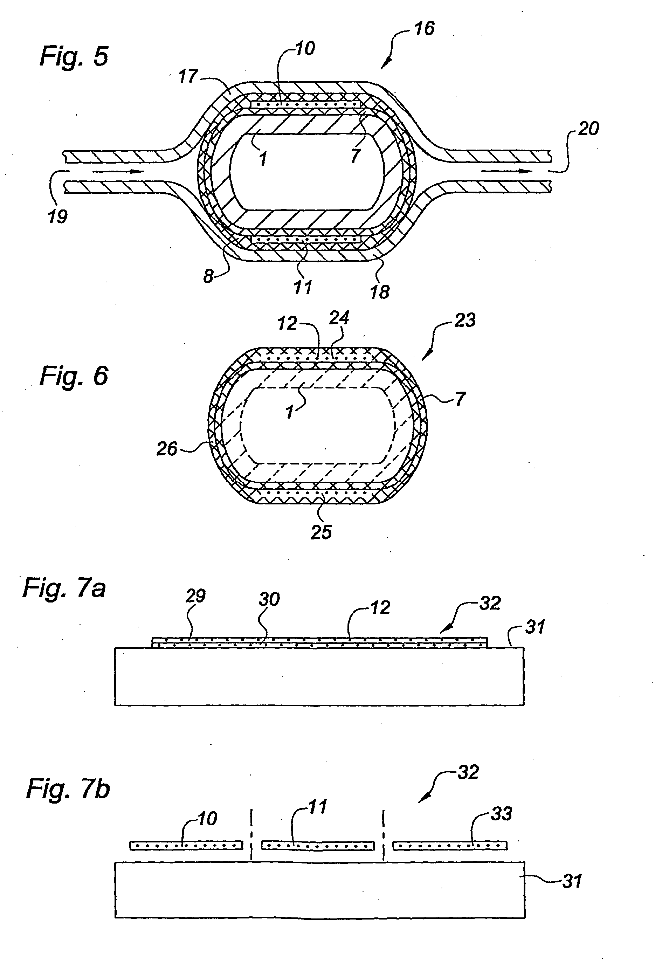

Les pièces 10 et 11 comportent des fibres 12 qui sont prises à l'intérieur d'une première résine prépolymérisée. Ces fibres 12 possèdent un alignement quasi parfait à l'intérieur des pièces 10 et 11, et sont parallèles entre elles. Les pièces 10 et 11 sont positionnées, de manière que les fibres 12 possèdent une orientation perpendiculaire au plan de la feuille, dans la direction de l'allongement du support 1, soit dans la direction des efforts de compression qui seront appliqués sur la pièce finale. Les figures 7a et 7b expliquent en détail comment sont obtenues les pièces 10 et 11.

En variante, les pièces 10 et 11 comportent une forme légèrement courbe à leurs extrémités et prennent ainsi en partie la forme des faces 4, 5.

La figure 4 montre une troisième étape du procédé selon l'invention dans laquelle des deuxièmes éléments 13 fibreux sont positionnés autour des premiers éléments 6 fibreux et des pièces 10 et 11. Ces deuxièmes éléments 13 possèdent de préférence une forme de chaussette, comme les premiers éléments 6.

La préforme 8 sèche comporte alors une première couche et une deuxième couche d'éléments fibreux 6 et 13 entre lesquelles ont été introduites les pièces 10 et 11.

Là encore, il est possible de déposer à nouveau de la résine sous forme poudreuse ou en spray afin de rigidifier d'avantage la préforme 8.

La figure 5 montre une quatrième étape du procédé selon l'invention dans laquelle on place l'ensemble du support 1, des pièces 10 et 11 et de la préforme 8 sèche dans un moule 16 tubulaire. Ce moule 16 comporte deux parties 17 et 18 qui sont plaquées contre la préforme 8. Ces parties 17 et 18 prennent ainsi en sandwich l'ensemble des fibres 7 sèches de la préforme 8 et des pièces 10 et 11 préimprégnées.

Les parties 17 et 18 du moule 16 comportent respectivement des ouvertures 19 et 20 à travers lesquelles est injectée une deuxième résine utilisée pour le procédé RTM. L'ouverture 19 correspond à l'ouverture d'entrée de la deuxième résine, tandis que l'ouverture 20 correspond à l'ouverture de sortie de la deuxième résine. La deuxième résine se répand ainsi uniformément à l'intérieur du moule 16. Plus précisément, cette deuxième résine se répand dans la préforme 8 en remplissant les zones de vide qui séparent les fibres 7 sèches et en imprégnant ces fibres sèches. En revanche, cette deuxième résine ne peut pas se répandre dans les pièces 10 et 11 préimprégnées puisque la première résine occupe déjà leur volume.

Après avoir injecté la deuxième résine, on polymérise en même temps la première et la deuxième résine. Plus précisément, on polymérise complètement la deuxième résine et on finit de polymériser complètement la première résine. En effet, lors de cette étape de polymérisation finale, la première et la deuxième résine sont polymérisées ensemble pendant une durée déterminée, la première résine étant à l'origine à un stade de polymérisation plus avancé que la deuxième résine. Des liaisons moléculaires se créent alors entre ces résines, et il n'est plus possible de discerner les contours des pièces préimprégnées 10 et 11 qui se fondent dans la première résine.

Comme la première résine est prépolymérisée partiellement, les fibres 12 des pièces préimprégnées 10 et 11 ne se déplacent pas lors de cette étape de polymérisation finale. Cette absence de déplacement garantit un bon alignement des fibres 12 à l'intérieur de la pièce finale.

De préférence, la première et la deuxième résine sont les mêmes. Dans le cas où ces résines seraient différentes, elles sont choisies de manière à présenter des structures moléculaires compatibles entre elles. En outre, si la polymérisation est réalisée en chauffant les résines, on choisit des résines qui possèdent des températures de polymérisation identiques ou voisines. La polymérisation finale peut être faite sous pression ou sous vide.

La figure 6 montre une cinquième étape du procédé selon l'invention dans laquelle on ouvre le moule 16 pour obtenir une pièce 23 composite finale. Cette pièce 23 finale comporte globalement la forme du support 1.

A la fin du procédé, ce support 1 peut d'ailleurs être soit conservé à l'intérieur de la pièce 23 finale, soit enlevé du centre de cette pièce 23.

Cette pièce 23 finale comporte une section qui présente des premières zones 24 et 25 et une deuxième zone 26 distinctes possédant des caractéristiques mécaniques différentes. En effet, les premières zones 24 et 25 possèdent un taux volumique de fibres supérieur à 55 %. Ces premières zones 24 et 25 correspondent respectivement aux pièces 10 et 11 et comportent donc des fibres sensiblement parallèles entre elles.

La deuxième zone 26 possède un taux volumique de fibres généralement inférieur à 55 %. Cette deuxième zone 26 correspond à la préforme RTM 8 et comporte donc des fibres entrelacées qui forment avec l'axe de la pièce des angles de plus ou moins 45 degrés.

Les fibres 12 parallèles orientées suivant la direction perpendiculaire à la feuille sont prévues pour supporter des efforts de compression. Tandis que les fibres 7 orientées à plus ou moins 45 degrés sont prévues pour supporter des efforts de flambage qui sont appliqués suivant une direction autre que celle qui est perpendiculaire à la feuille.

Dans une réalisation particulière, les fibres 7 sèches de la préforme 8 et les fibres 12 des pièces 10 et 11 sont en carbone, en fibres de verres, en kevlar, ou en céramique. Dans cette réalisation, la première et la deuxième résine sont des résines à base époxy, d'ester de cyanate, de phenol, ou de polyester.

Les figures 7 montrent des étapes du procédé selon l'invention permettant de réaliser les pièces 10 et 11 préimprégnées et prépolymérisées.

Dans une première étape représentée sur la figure 7a, on plaque deux empilements (ou plus) de rubans 29 et 30 préimprégnés et non polymérisés contre une face d'un outillage 31 spécifique adapté à la réalisation de pièces préimprégnées. Les rubans non polymérisés 29 et 30 prennent ainsi la forme du support 1 qui est essentiellement plan. On obtient alors une grande plaque 32 préimprégnée qui est non polymérisée.

Plus précisément, chaque ruban 29, 30 comporte des fibres 12 sensiblement alignées et parallèles entre elles dans une direction perpendiculaire au plan de la feuille. Ces fibres sont préimprégnées de la première résine qui les lie entre elles. Pour former une pièce préimprégnée, les rubans 29, 30 sont plaqués les uns sur les autres, de sorte que les fibres de tous les rubans sont sensiblement parallèles entre elles. En variante, les rubans 29, 30 sont plaqués les uns sur les autres, se sorte que les fibres d'un ruban donné forment un angle particulier, par exemple un angle de plus ou moins 10 degrés, avec les fibres d'un autre ruban.

Après avoir positionné les rubans, on polymérise partiellement la première résine de la plaque 32. Plus précisément, on arrête la polymérisation lorsque la résine est suffisamment rigide pour que les fibres 12 préimprégnées soient figées dans leur position, à l'intérieur de cette résine. Les fibres 12 préimprégnées vont ainsi pouvoir conserver leur alignement lors de la mise en oeuvre des étapes ultérieures du procédé selon l'invention. La polymérisation partielle est de préférence réalisée à l'intérieur d'un moule sous vide et sous pression.

Dans une réalisation, on polymérise la première résine de la plaque 32 à un taux de polymérisation de 10% environ. Ce taux de polymérisation correspond à l'avancement global de la polymérisation et de l'établissement de chaînes de molécules à l'intérieur de la résine. Dans d'autres réalisations, il serait possible de polymériser partiellement la première résine à un taux de polymérisation compris entre 5 et 70%.

Une fois que la première résine a été partiellement polymérisée, on démoule la plaque 32. On obtient alors une plaque 32 préimprégnée et prépolymérisée.

Puis, comme représenté à la figure 7b, on découpe la plaque 32 préimprégnée et prépolymérisée de manière à obtenir plusieurs pièces 10, 11, 33. La plaque 32 peut être découpée directement sur l'outillage 31 à l'aide d'outils coupants adaptés à la découpe de résine polymérisée.

Le fait de réaliser au préalable une grande plaque 32 de préimprégnée prépolymérisée est économique et permet un gain de temps important. En effet, il est possible d'obtenir de nombreuses pièces préimprégnées et prépolymérisées en ne réalisant qu'une seule étape de polymérisation partielle.

En variante, il serait possible de positionner des rubans 29 et 30 préimprégnés et non polymérisés sur le support 1 nu, avant de réaliser l'étape de la figure 2. L'étape de polymérisation partielle de la première résine pourrait alors être réalisée en mettant le support 1 et les rubans à l'intérieur d'un moule sous pression. Ce n'est qu'ensuite que la préforme 8 fibreuse sèche serait positionnée autour du support 1.

En variante, on donne à la plaque 32 une forme ondulée en positionnant les rubans 29, 30 à l'intérieur d'un moule à formes légèrement courbées. Les pièces obtenues peuvent ainsi être plaquées contre des côtés courbés du support 1.

## Revendications

1. Procédé de fabrication d'une pièce composite RTM, Resin Transfer Moulding, comportant les étapes suivantes :
- on réalise une pièce (10, 11) préimprégnée, cette pièce (10, 11) comportant des fibres (12) alignées entre elles, ces fibres étant imprégnées d'une première résine,
- on soumet la première résine seule de la pièce préimprégnée à une première étape de polymérisation partielle jusqu'à un stade tel que la première résine est suffisamment rigide pour que les fibres soient figées dans leur position à l'intérieur de cette résine, la première résine étant polymérisée partiellement à un taux de polymérisation compris entre 5 et 70%,
- on positionne autour d'un support (1) la pièce (10, 11) prépolymérisée et une préforme (8) fibreuse sèche, la préforme comportant des éléments (6, 13) fibreux, ces éléments fibreux (6, 13) comportant des fibres (7) sèches,
- on injecte une deuxième résine dans la préforme fibreuse, et
- dans une deuxième étape de polymérisation, on polymérise la deuxième résine et on termine de polymériser la première résine simultanément.

2. Procédé selon la revendication 1, **caractérisé en ce que** :
- la pièce (10, 11) préimprégnée est formée par des rubans (29, 30) de fibres superposés les uns sur les autres, les fibres de la pièce préimprégnée étant, pour chaque ruban, sensiblement parallèles entre elles.

3. Procédé selon la revendication 1 ou 2, **caractérisé en ce que** :
- on positionne la pièce (10, 11) préimprégnée et prépolymérisée entre les éléments (6, 13) fibreux de la préforme (8).

4. Procédé selon l'une des revendications 1 à 3, **caractérisé en ce que** :
- la première et la deuxième résine présentent des structures moléculaires compatibles entre elles.

5. Procédé selon la revendication 4, **caractérisé en ce que** :
- la première et la deuxième résine ont sensiblement la même composition chimique.

6. Procédé selon l'une des revendications 1 à 5, **caractérisé en ce que** pour injecter la deuxième résine,
- on place le support (1), la préforme (8) et la pièce (10, 11) à l'intérieur d'un moule (16), et
- on injecte à l'intérieur du moule (16) la deuxième résine de manière que cette deuxième résine imprègne les fibres (7) sèches de la préforme (8).

7. Procédé selon l'une des revendications 1 à 6, **caractérisé en ce que** pour réaliser la pièce (10,11) préimprégnée et prépolymérisée :
- ou met en forme des empilements de rubans (29, 30) préimprégnés avant l'étape de prépolymérisation, ces rubans (29, 30) comportant des fibres (12) sensiblement alignées et parallèles entre elles, ces fibres (12) étant liées entre elles par la première résine, et
- on polymérise partiellement la première résine de ces rubans ainsi mis en forme.

8. Procédé selon la revendication 7, **caractérisé en ce que** on réalise la polymérisation partielle de la première résine sous vide et sous pression.

9. Procédé selon la revendication 7 ou 8, **caractérisée en ce que** on met en forme les rubans (29, 30) sur un outillage (31) spécifique dédié à la réalisation de pièces préimprégnées.

10. Procédé selon la revendication 7 ou 8, **caractérisé en ce que** on met en forme les rubans (29, 30) sur le support (1).

11. Procédé selon l'une des revendications 7 à 10, **caractérisé en ce que** on réalise des opérations de découpe et / ou d'usinage sur les rubans (29, 30) mis en forme et prépolymérisés.

12. Procédé selon l'une des revendications 1 à 11, **caractérisé en ce que** on utilise des éléments (6, 13) fibreux en forme de chaussette, ces éléments (6,13) fibreux comportant des fibres (7) entrelacées.

13. Procédé selon la revendication 12, **caractérisé en ce que** on utilise des fibres (7) entrelacées à plus ou moins 45 degrés.

14. Procédé selon l'une des revendications 1 à 13, **caractérisé en ce que** on positionne les fibres de la pièce (10, 11) préimprégnée et prépolymérisée parallèlement à une direction d'une force de compression susceptible d'être appliquée sur une pièce (23) finale obtenue.

15. Bielle en matériaux composite comportant un axe de compression privilégié **caractérisée en ce qu'**elle est réalisée par la mise en oeuvre du procédé défini selon l'une des revendications 1 à 15 et **en ce qu'**elle comporte :
- au moins deux couches (6, 13) d'éléments fibreux comportant des fibres (7) entrelacées imprégnées de résine après mise en forme par un procédé RTM, et
- des pièces (10, 11) réalisées en matériau composite utilisant des fibres préimprégnées de résine et positionnées entre les couches (6, 13) d'éléments fibreux, lesdites pièces (10, 11) comportant des fibres (12) sensiblement parallèles entre elles, ces fibres (12) étant orientées sensiblement suivant l'axe de compression privilégié de la bielle.

16. Bielle selon la revendication 15, **caractérisée en ce qu'**elle comporte en outre un support (1) tubulaire allongé sur lequel sont positionnées les couches (6, 13) d'éléments fibreux.

## Claims

1. Method for producing a composite RTM (resin transfer moulding) part, comprising the following steps:
- a preimpregnated part (10, 11) is produced, the part (10, 11) comprising mutually aligned fibres (12), the fibres being impregnated with a first resin,
- only the first resin of the preimpregnated part is subjected to a first partial polymerisation step to a stage such that the first resin is sufficiently rigid that the fibres are fixed in their position inside the resin, the first resin being partially polymerised to a degree of polymerisation of from 5 to 70%,
- the prepolymerised part (10, 11) and a dry fibrous preform (8) are positioned around a support (1), the preform comprising fibrous elements (6, 13), the fibrous elements (6, 13) comprising dry fibres (7),
- a second resin is injected into the fibrous preform, and
- in a second polymerisation step, the second resin is polymerised and polymerisation of the first resin is completed simultaneously.

2. Method according to claim 1, **characterised in that**:
- the preimpregnated part (10, 11) is formed by strips (29, 30) of fibres superposed on one another, the fibres of the preimpregnated part being substantially parallel to one another for each strip.

3. Method according to claim 1 or 2, **characterised in that**:
- the preimpregnated and prepolymerised part (10, 11) is positioned between the fibrous elements (6, 13) of the preform (8).

4. Method according to any one of claims 1 to 3, **characterised in that**:
- the first and second resins have mutually compatible molecular structures.

5. Method according to claim 4, **characterised in that**:
- the first and second resins have substantially the same chemical composition.

6. Method according to any one of claims 1 to 5, **characterised in that**, in order to inject the second resin,
- the support (1), the preform (8) and the part (10, 11) are placed inside a mould (16), and
- the second resin is injected into the mould (16) in such a manner that the second resin impregnates the dry fibres (7) of the preform (8).

7. Method according to any one of claims 1 to 6, **characterised in that**, in order to produce the preimpregnated and prepolymerised part (10, 11):
- stacks of preimpregnated strips (29, 30) are shaped prior to the prepolymerisation step, the strips (29, 30) comprising substantially aligned and mutually parallel fibres (12), the fibres (12) being bonded together by the first resin, and
- the first resin of the strips so shaped is partially polymerised.

8. Method according to claim 7, **characterised in that** the partial polymerisation of the first resin is carried out in *vacuo* and under pressure.

9. Method according to claim 7 or 8, **characterised in that** the strips (29, 30) are shaped on a specific tool (31) dedicated to the production of preimpregnated parts.

10. Method according to claim 7 or 8, **characterised in that** the strips (29, 30) are shaped on the support (1).

11. Method according to any one of claims 7 to 10, **characterised in that** cutting and/or machining operations are carried out on the shaped and prepolymerised strips (29, 30).

12. Method according to any one of claims 1 to 11, **characterised in that** fibrous elements (6, 13) in sleeve form are used, the fibrous elements (6, 13) comprising interlaced fibres.

13. Method according to claim 12, **characterised in that** fibres (7) interlaced at more or less 45 degrees are used.

14. Method according to any one of claims 1 to 13, **characterised in that** the fibres of the preimpregnated and prepolymerised part (10, 11) are placed parallel to a direction of a compressive force which is liable to be applied to a final part (23) that is obtained.

15. Connecting rod of composite material having a preferential compression axis, **characterised in that** it is produced by carrying out the method defined according to any one of claims 1 to 15 and **in that** it comprises:
- at least two layers (6, 13) of fibrous elements comprising interlaced fibres (7) impregnated with resin after shaping by an RTM method, and
- parts (10, 11) produced from composite material using fibres preimpregnated with resin and positioned between the layers (6, 13) of fibrous elements, said parts (10, 11) comprising substantially mutually parallel fibres (12), the fibres (12) being oriented substantially according to the preferential compression axis of the connecting rod.

16. Connecting rod according to claim 15, **characterised in that** it further comprises an elongated tubular support (1) on which the layers (6, 13) of fibrous elements are positioned.

## Patentansprüche

1. Verfahren zum Herstellen eines RTM, Resin-Transfer-Moulding, Verbundteils mit den Schritten, bei denen man:
- ein vorimprägniertes Teil (10, 11) realisiert, welches miteinander ausgerichtete Fasern (12) aufweist, die mit einem ersten Harz imprägniert sind,
- nur das erste Harz des vorimprägnierten Teils einer ersten Stufe der Teilpolymerisation unterwirft bis zu einem Stadium, in dem das erste Harz ausreichend starr ist, so daß die Fasern in ihrer Position im Inneren dieses Harzes fest werden, wobei das erste Harz auf einen Polymerisationsgrad zwischen 5 und 70% teilweise polymerisiert wird,
- das vorpolymerisierte Teil (10, 11) und einen trockenen faserigen Vorformling (8) um einen Träger (1) herum anordnet, wobei der Vorformling (8) faserige Elemente (6, 13) aufweist, die trockene Fasern (7) aufweisen,
- ein zweites Harz in den faserigen Vorformling einspritzt und
- in einer zweiten Polymerisationsstufe das zweite Harz polymerisiert und gleichzeitig die Polymerisation des ersten Harzes beendet.

2. Verfahren nach Anspruch 1, **dadurch gekennzeichnet, daß**:
- das vorimprägnierte Teil (10, 11) aus übereinandergelegten Faserbändern (29, 30) gebildet ist, wobei die Fasern des vorimprägnierten Teils für jedes Band im wesentlichen parallel zueinander sind.

3. Verfahren nach Anspruch 1 oder 2, **dadurch gekennzeichnet, daß**:
- das vorimprägnierte und vorpolymerisierte Teil (10, 11) zwischen den faserigen Elementen (6, 13) des Vorformlings (8) angeordnet wird.

4. Verfahren nach einem der Ansprüche 1 bis 3, **dadurch gekennzeichnet, daß**:
- das erste und das zweite Harz miteinander kompatible molekulare Strukturen aufweisen.

5. Verfahren nach Anspruch 4, **dadurch gekennzeichnet, daß**:
- das erste und das zweite Harz im wesentlichen dieselbe chemische Zusammensetzung haben.

6. Verfahren nach einem der Ansprüche 1 bis 5, **dadurch gekennzeichnet, daß** zum Einspritzen des zweiten Harzes:
- der Träger (1), der Vorformling (8) und das Teil (10, 11) im Inneren einer Form (16) angeordnet werden und
- das zweite Harz derart in das Innere der Form (16) eingespritzt wird, daß das zweite Harz die trockenen Fasern (7) des Vorformlings (8) imprägniert.

7. Verfahren nach einem der Ansprüche 1 bis 6, **dadurch gekennzeichnet, daß** für das Realisieren des vorimprägnierten und vorpolymerisierten Teils (10, 11):
- vor dem Schritt der Vorpolymerisation Stapel von vorimprägnierten Bändern (29, 30) ausgestaltet werden, wobei diese Bänder (29, 30) Fasern (12) aufweisen, die im wesentlichen miteinander ausgerichtet und parallel zueinander sind und die durch das erste Harz miteinander verbunden sind, und
- das erste Harz der so ausgestalteten Bänder teilweise polymerisiert wird.

8. Verfahren nach Anspruch 7, **dadurch gekennzeichnet, daß** die Teilpolymerisation des ersten Harzes unter Vakuum und unter Druck durchgeführt wird.

9. Verfahren nach Anspruch 7 oder 8, **dadurch gekennzeichnet, daß** die Bänder (29, 30) auf einem speziellen Werkzeug (31) ausgestaltet werden, welches für die Realisierung von vorimprägnierten Teilen bestimmt ist.

10. Verfahren nach Anspruch 7 oder 8, **dadurch gekennzeichnet, daß** die Bänder (29, 30) auf dem Träger (1) ausgestaltet werden.

11. Verfahren nach einem der Ansprüche 7 bis 10, **dadurch gekennzeichnet, daß** an den ausgestalteten und vorpolymerisierten Bändern (29, 30) Zuschneide- und/oder Verarbeitungsprozesse durchgeführt werden.

12. Verfahren nach einem der Ansprüche 1 bis 11, **dadurch gekennzeichnet, daß** faserige Elemente (6, 13) in Form kurzer Rohre verwendet werden, welche ineinander verschlungene Fasern (7) aufweisen.

13. Verfahren nach Anspruch 12, **dadurch gekennzeichnet, daß** Fasern (7) verwendet werden, die um ungefähr 45 Grad ineinander verschlungen sind.

14. Verfahren nach einem der Ansprüche 1 bis 13, **dadurch gekennzeichnet, daß** die Fasern des vorimprägnierten und vorpolymerisierten Teils (10, 11) parallel zu einer Richtung einer Druckkraft, die geeignet ist, auf ein erhaltenes, fertiges Teil (23) aufgebracht zu werden, angeordnet werden.

15. Pleuelstange aus Verbundwerkstoff mit einer vorrangigen Druckachse, **dadurch gekennzeichnet, daß** sie durch die Durchführung des nach einem der Ansprüche 1 bis 15 definierten Verfahrens realisiert ist und aufweist:
- mindestens zwei Lagen (6, 13) aus faserigen Elementen, die ineinander verschlungene Fasern (7) aufweisen, welche nach der Ausgestaltung durch ein RTM-Verfahren mit Harz imprägniert wurden, und
- Teile (10, 11), die aus Verbundwerkstoff unter Verwendung von mit Harz vorimprägnierten Fasern realisiert und zwischen den Lagen (6, 13) aus faserigen Elementen angeordnet sind, wobei die Teile (10, 11) Fasern (12) aufweisen, die im wesentlichen parallel zueinander sind und im wesentlichen entlang der vorrangigen Druckachse der Pleuelstange ausgerichtet sind.

16. Pleuelstange nach Anspruch 15, **dadurch gekennzeichnet, daß** sie ferner einen länglichen rohrförmigen Träger (1) aufweist, auf dem die Lagen (6,13) aus faserigen Elementen angeordnet sind.
